# EUROPEAN PATENT APPLICATION

(11) **EP 4 852 572 A1**
(43) Date of publication of application: **09.12.2026**
(21) Application number: 24920790.3
(22) Date of filing: 29.01.2024
(51) Int. Cl.: H04W 72/1268

(54) **UPLINK TRANSMISSION METHOD AND APPARATUS, DEVICE, STORAGE MEDIUM, AND CHIP**

(71) Applicant: GUANGDONG OPPO MOBILE TELECOMMUNICATIONS CORP., LTD., Dongguan City, Guangdong (CN)
(72) Inventor: HE, Chuanfeng, Dongguan, Guangdong 523860 (CN)
(74) Representative: RGTH
(86) International application number: PCT/CN2024/074490
(87) International publication number: WO 2025/160706

(57) **Abstract**

An uplink transmission method and apparatus, a device, a storage medium, and a chip, relating to the technical field of mobile communications. The method is executed by a terminal device, and comprises step 210: performing uplink transmission to a network device by means of an uplink resource, wherein the uplink resource is associated with a device attribute of the terminal device, and the device attribute comprises one or more of the following: a device type, a device capability, and a service type. According to the solution, terminal devices having different device attributes can perform uplink transmission by means of different uplink resources, so that resource conflicts and interference during uplink transmission between the terminal devices can be effectively avoided, thereby increasing the success rate of uplink transmission, further reducing unnecessary energy consumption of the terminal devices, and improving the uplink transmission efficiency and the energy utilization rate of the terminal devices.

## Description

### TECHNICAL FIELD

The present application relates to the field of mobile communication technologies, and in particular, to a method for uplink transmission, an apparatus, a device, a storage medium and a chip.

### BACKGROUND

With the continuous development of mobile communication technologies, a terminal device may perform uplink transmission to a network device.

In the related art, the terminal device may perform uplink transmission based on network scheduling or through grant-free resources.

### SUMMARY

Embodiments of the present application provide a method for uplink transmission, an apparatus, a device, a storage medium and a chip. The technical solutions are as follows.

In one aspect, the embodiments of the present application provide a method for uplink transmission, which is performed by a terminal device and includes:
performing uplink transmission to a network device through an uplink resource, where the uplink resource is associated with a device attribute of the terminal device, and the device attribute includes one or more of: a device type, a device capability or a service type.

In one aspect, the embodiments of the present application provide a method for uplink transmission, which is performed by a network device and includes:
receiving uplink transmission performed by a terminal device through an uplink resource, where the uplink resource is associated with a device attribute of the terminal device, and the device attribute includes one or more of: a device type, a device capability or a service type.

In another aspect, the embodiments of the present application provide an apparatus for uplink transmission, which includes:
a transmitting module, configured to perform uplink transmission to a network device through an uplink resource, where the uplink resource is associated with a device attribute of a terminal device, and the device attribute includes one or more of: a device type, a device capability or a service type.

In another aspect, the embodiments of the present application provide an apparatus for uplink transmission, which includes:
a receiving module, configured to receive uplink transmission performed by a terminal device through an uplink resource, where the uplink resource is associated with a device attribute of the terminal device, and the device attribute includes one or more of: a device type, a device capability or a service type.

In another aspect, the embodiments of the present application provide a terminal device, which includes a processor, a memory and a transceiver;
where the memory is configured to store a computer program, and the processor is configured to execute the computer program, to enable the terminal device to implement the above method for uplink transmission.

In another aspect, the embodiments of the present application provide a network device, which includes a processor, a memory and a transceiver;
where the memory is configured to store a computer program, and the processor is configured to execute the computer program, to enable the network device to implement the above method for uplink transmission.

In yet another aspect, the embodiments of the present application further provide a computer-readable storage medium having a computer program stored thereon, where the computer program is loaded and executed by a processor, to implement the above methods for uplink transmission.

In yet another aspect, the present application further provides a chip, which includes an integrated circuit and an application program, where the chip is configured to operate in a communication device, to enable the communication device to perform the above methods for uplink transmission.

In yet another aspect, the present application provides a computer program product, which includes computer instructions, where the computer instructions are stored in a computer-readable storage medium. A processor of a communication device reads the computer instructions from the computer-readable storage medium and executes the computer instructions, to enable the communication device to perform the methods for uplink transmission.

In yet another aspect, the present application provides a computer program, where the computer program is executed by a processor of a communication device, to implement the methods for uplink transmission.

The embodiments of the present application provide a scheme for uplink transmission, where the terminal device performs uplink transmission based on the uplink resource corresponding to its device attribute. The above scheme enables terminal devices with different device attributes to perform uplink transmission through different uplink resources, thereby effectively avoiding resource conflicts and interference among terminal devices during uplink transmission, improving the success rate of uplink transmission, further reducing unnecessary energy consumption of the terminal device, and enhancing the uplink transmission efficiency and energy utilization of the terminal device.

### BRIEF DESCRIPTION OF THE DRAWINGS

To more clearly illustrate the technical solutions in the embodiments of the present application, accompanying drawings required in the description of the embodiments will be briefly introduced below. It is apparent that the accompanying drawings described below are merely some embodiments of the present application. For those skilled in the art, other drawings can also be obtained according to these accompanying drawings without creative effort.
FIG. 1 is a schematic diagram of a communication system provided by an exemplary embodiment of the present application.
FIG. 2 is a flowchart of a method for uplink transmission provided by an exemplary embodiment of the present application.
FIG. 3 is a flowchart of a method for uplink transmission provided by an exemplary embodiment of the present application.
FIG. 4 is a flowchart of a method for uplink transmission provided by an exemplary embodiment of the present application.
FIG. 5 is a principle diagram of backscattering communication provided by an exemplary embodiment of the present application.
FIG. 6 is a schematic diagram of multiple sets of CG resources provided by an exemplary embodiment of the present application.
FIG. 7 is a block diagram of an apparatus for uplink transmission provided by an exemplary embodiment of the present application.
FIG. 8 is a block diagram of an apparatus for uplink transmission provided by an exemplary embodiment of the present application.
FIG. 9 is a schematic structural diagram of a communication device provided by an exemplary embodiment of the present application.

### DETAILED DESCRIPTION OF EMBODIMENTS

To make the objectives, technical solutions and advantages of the present application clearer, the implementations of the present application will be further described in detail below with reference to the accompanying drawings.

The network architecture and service scenarios described in the embodiments of the present application are intended to illustrate the technical solutions of the embodiments of the present application more clearly and do not constitute a limitation on the technical solutions provided in the embodiments of the present application. A person of ordinary skill in the art will appreciate that, with the evolution of network architectures and the emergence of new service scenarios, the technical solutions provided in the embodiments of the present application are equally applicable to similar technical problems.

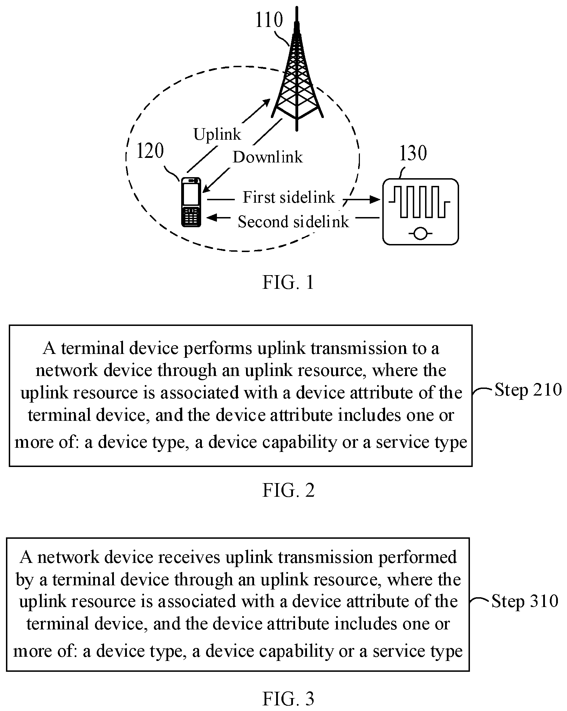

Referring to FIG. 1, a schematic diagram of a communication system related to an exemplary embodiment of the present application is illustrated. As illustrated in FIG. 1, the communication system includes a network device 110 and a terminal device 120, and/or a terminal device 120 and a terminal device 130, which are not limited in the present application.

The network device 110 in the present application provides wireless communication functions. The network device 110 includes, but is not limited to, an evolved node B (eNB), a radio network controller (RNC), a node B (NB), a base station controller (BSC), a base transceiver station (BTS), a home base station (e.g., a home evolved node B or home node B, HNB), a baseband unit (BBU), an access point (AP), a wireless relay node, a wireless backhaul node, a transmission point (TP) or a transmission and reception point (TRP) in a wireless fidelity (Wi-Fi) system. The network device 110 may also be a next generation node B (gNB) or transmission point (TRP or TP) in a 5th Generation (5G) mobile communication system, or one or a group of antenna panels (including multiple antenna panels) of a base station in a 5G system, or a network node constituting a gNB or transmission point, such as a BBU or a distributed unit (DU); or a base station in a beyond fifth generation (B5G) or 6th Generation (6G) mobile communication system, or a core network (CN), fronthaul, backhaul, a radio access network (RAN), a network slice; or a serving cell, a primary cell (PCell), a primary secondary cell (PSCell), a special cell (SpCell), a secondary cell (SCell) or a neighbor cell of a terminal device.

The terminal device 120 and/or the terminal device 130 in the present application are also referred to as a user equipment (UE), an access terminal, a user unit, a user station, a mobile station, a mobile platform, a remote station, a remote terminal, a mobile device, a user terminal, a terminal, a wireless communication device, a user agent or a user apparatus. The terminal includes, but is not limited to, a handheld device, a wearable device, a vehicle-mounted device and an Internet of Things device, such as, a mobile phone, a tablet computer, an e-book reader, a laptop computer, a desktop computer, a television, a gaming console, a mobile internet device (MID), an augmented reality (AR) terminal, a virtual reality (VR) terminal and a mixed reality (MR) terminal, a wearable device, a hand shank, an electronic tag, a controller, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a session initiation protocol (SIP) phone, a wireless local loop (WLL) station, a personal digital assistant (PDA), a set top box (STB), or a customer premise equipment (CPE).

The network device 110 communicates with the terminal device 120 through a certain air interface technology, such as a Uu interface.

Exemplarily, there are two communication scenarios between the network device 110 and the terminal device 120: an uplink communication scenario and a downlink communication scenario. Uplink communication refers to transmitting signals to the network device 110, while downlink communication refers to transmitting signals to the terminal device 120.

The terminal device 120 communicates with the terminal device 130 through a certain air interface technology, such as a PC5 interface.

In some embodiments, there are two communication scenarios between the terminal device 120 and the terminal device 130: a first sidelink communication scenario and a second sidelink communication scenario. First sidelink communication refers to transmitting signals to the terminal device 130, while second sidelink communication refers to transmitting signals to the terminal device 120.

The terminal device 120 and the terminal device 130 are all within network coverage and located in the same cell, or the terminal device 120 and the terminal device 130 are all within network coverage but located in different cells, or the terminal device 120 is within network coverage while the terminal device 130 is outside network coverage.

Exemplarily, the terminal device 130 is a zero-power terminal.

Exemplarily, the terminal device 130 is a zero-power terminal based on radio frequency identification (RFID).

A zero-power terminal refers to a device that utilizes various forms of ambient energy, such as radio frequency energy, light energy, solar energy, thermal energy and mechanical energy. Such a device may have no energy storage capability or may possess a very limited energy storage capability (e.g., using a capacitor with a capacitance of several tens of uF).

In some embodiments, the zero-power terminal may form a zero-power Internet of Things (Ambient power enabled IoT, A-IoT), also referred to as Ambient IoT for short. An ambient IoT device may communicate directly with the network device 110.

The technical solutions provided in the embodiments of the present application may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, a LTE frequency division duplex (FDD) system, a LTE time division duplex (TDD) system, an advanced long term evolution (LTE-A) system, a universal mobile telecommunication system (UMTS), a worldwide interoperability for microwave access (WiMAX) communication system, a 5G mobile communication system, a new radio (NR) system, an evolved system of NR, a LTE-based access to unlicensed spectrum (LTE-U) system, an NR-based access to unlicensed spectrum (NR-U) system, a terrestrial networks (TN) system, a non-terrestrial networks (NTN) system, wireless local area networks (WLAN), wireless fidelity (Wi-Fi), a cellular Internet of Things system, and a cellular passive Internet of Things system. The technical solutions may be also applicable to subsequent evolved systems of 5G NR, as well as B5G, 6G and their subsequent evolved systems. In some embodiments of the present application, "NR" may also be referred to as the 5G NR system or 5G system. The 5G mobile communication system may include non-standalone (NSA) networking and/or standalone (SA) networking.

The technical solutions provided in the embodiments of the present application may also be applied to machine type communication (MTC), long term evolution-machine (LTE-M), device to device (D2D) networks, machine to machine (M2M) networks, Internet of Things (IoT) networks or other networks. The IoT network may, for example, include the Internet of Vehicles. The communication mode in an Internet of Vehicles system is collectively referred to as vehicle-to-X (V2X, where X can represent anything). For example, V2X may include vehicle to vehicle (V2V) communication, vehicle to infrastructure (V2I) communication, vehicle to pedestrian (V2P) communication, vehicle to network (V2N) communication or the like.

Before introducing the technical solutions of the present application, some background technical knowledge related to the present application will be described. The following related technologies, as optional solutions, can be arbitrarily combined with the technical solutions of the embodiments of the present application, and all such combinations fall within the protection scope of the embodiments of the present application. The embodiments of the present application include at least part of the following content.

### I. Classification of Zero-Power Terminal

Based on the energy source and usage of zero-power terminals, the zero-power terminals can be classified into the following types.

### 1) Passive zero-power terminal

A zero-power terminal does not require a built-in battery. When the zero-power terminal approaches a network device (such as a Reader/Writer in an RFID system), the zero-power terminal is within a near-field range formed by antenna radiation of the network device. Therefore, an antenna of the zero-power terminal generates an induced current through electromagnetic induction, and the induced current drives a low-power chip circuit of the zero-power terminal, which realizes demodulation of forward link signals and modulation of backward link signals. For a backscattering link, the zero-power terminal transmits signals by means of backscattering.

It can be seen that the passive zero-power terminal does not require a built-in battery to drive either the forward link or the reverse link, and is a true zero-power terminal.

Since the passive zero-power terminal does not require batteries, its radio frequency circuit and baseband circuit are very simple, for example, there is no need for devices such as a low noise amplifier (LNA), a power amplifier (PA), a crystal oscillator or an analog-to-digital converter (ADC). Therefore, the passive zero-power terminal has many advantages such as small size, light weight, very cheap price and long service life.

### 2) Semi-passive zero-power terminal

A semi-passive zero-power terminal itself is also not equipped with a conventional battery, but may use a radio frequency (RF) power harvesting module to harvest radio wave energy, and then, store harvested energy in an energy storage unit (such as a capacitor). After obtaining the energy, the energy storage unit may drive the low-power chip circuit of the zero-power terminal, which realizes demodulation of forward link signals and modulation of backward link signals. For the backscattering link, the zero-power terminal transmits signals by means of backscattering.

It can be seen that the semi-passive zero-power terminal does not require a built-in battery to drive either the forward link or the reverse link. Although the energy stored in the capacitor is used during operation, the energy comes from the radio energy harvested by the power harvesting module. Therefore, it is also a true zero-power terminal.

The semi-passive zero-power terminal inherits many advantages of the passive zero-power terminal, and therefore, it has many advantages such as small size, light weight, very cheap price and long service life.

### 3) Active zero-power terminal

In some scenarios, the zero-power terminal used may also be an active zero-power terminal, and such a terminal may have a built-in battery. The battery is used to drive the low-power chip circuit of the zero-power terminal to realize demodulation of forward link signals and modulation of backward link signals. However, for the backscattering link, the zero-power terminal transmits signals by means of backscattering. Therefore, the zero-power aspect of this type of terminal is mainly reflected in the fact that signal transmission on the reverse link does not require own power of the terminal, but instead uses the backscattering manner.

The active zero-power terminal has a built-in battery for power supply, so as to increase the communication distance of the zero-power terminal and improve communication reliability. Therefore, it is applied in scenarios that have relatively high requirements for communication distance, read latency and the like.

### II. Cellular Passive Internet of Things

As 5G industry applications increase, the types and application scenarios of connected things are growing, leading to higher requirements for the price and power consumption of communication terminals. The application of battery-free and low-cost passive Internet of Things devices has become a key technology for cellular Internet of Things, enriching the types and quantity of terminal connections in 5G networks and truly realizing the Internet of Everything. Passive IoT devices may be based on existing zero-power devices and further extended to be suitable for the cellular IoT.

### III. Ambient Energy-based Devices

In NR systems and wireless network communication technology (Wi-Fi) systems, the battery-free and low-cost nature of devices may support low-cost large-scale deployment and maintenance-free operation of IoT devices. Current standards are studying how to support ambient energy-based IoT devices (referred to as ambient IoT or AMP IoT devices) in NR systems and Wi-Fi systems, the power required for their operation comes from ambient energy harvesting, and sources of the ambient energy may be wireless radio frequency signals, solar energy, thermal energy, mechanical energy and so on. Such devices are similar to the passive or semi-passive devices in zero-power communication. AMP IoT devices harvest ambient energy and store the harvested energy in an energy storage unit. Once the energy storage unit has acquired sufficient energy, it may drive the low-power circuit to perform operations such as demodulation of the forward link signals and modulation and transmission of the reverse link signals.

Research projects on Ambient IoT devices have been carried out in 3GPP RAN, and Ambient IoT devices are roughly divided into three types, each with corresponding complexity and communication capabilities.
(1) Device A: lacks energy storage capability and cannot perform independent signal transmission, i.e., uses backscattering transmission mode.
(2) Device B: possesses energy storage capability but cannot perform independent signal transmission, i.e., uses backscattering transmission mode and can use the stored energy to amplify the backscattered signal.
(3) Device C: possesses energy storage capability and can perform independent signal transmission, i.e., has active transmission capability.

Device A has the lowest complexity and power consumption, which may be as low as 1 µW, but its communication distance is limited, generally only a few meters. Device A requires a network device to provide a carrier signal for backscattering transmission. Device C generally has a capacitor with a relatively large capacitance to store energy harvested from the environment, its power consumption may reach several hundred µW, and it may support active signal transmission, having a relatively large communication distance. Since Device C may perform active transmission, it does not require the network device to provide a carrier signal. The complexity and power consumption of Device B are between those of Device A and Device C.

### IV. Configured Grant Transmission Technology

Since uplink services are initiated by a terminal, generally, a base station initiates a reasonable scheduling grant only after learning the uplink service requirement. Consequently, the traditional uplink transmission process is relatively complex, and primarily includes: the terminal reports a service request, the base station initiates scheduling to learn the service requirement, the terminal reports a scheduling request, the base station initiates uplink scheduling based on the scheduling request, and the terminal transmits data based on the uplink scheduling. The complex uplink service transmission process inevitably brings scheduling latency.

For ultra-reliable and low-latency communication (URLLC) technology in 3GPP standards, the scheduling latency may lead to the service failing to complete transmission within the required latency range, or may lead to the number of transmissions being compressed to one, thereby failing to obtain the benefits of the adaptive retransmission mechanism and lead to inefficient use of transmission resources.

Therefore, in the NR phase, for the low-latency requirements of URLLC, the configured grant (CG) transmission technology is introduced. The basic concept of the configured grant transmission technology is that the base station pre-allocates uplink transmission resources to the terminal, and the terminal may directly initiate uplink transmission on the pre-allocated resources based on the service requirements. Additionally, for the low-latency characteristics of URLLC, the configured grant transmission technology has made further physical layer optimization designs in terms of flexible transmission start points, resource configuration, and multiple sets of scheduling resource-free mechanisms.

There are two types of configured grant resource configuration manners: type 1 and type 2.
(1) Type 1: specific resource configuration information (which is different from dynamic uplink transmission or is information specific to scheduling-free transmission) required for transmission on CG resources is configured through higher-layer signaling. Once the higher-layer signaling configuration for type 1 configured grant resource configuration manner is completed, the configured grant resources are activated.
(2) Type 2: part of specific resource configuration information required for transmission on CG resources is configured through higher-layer signaling; and the configuration of the remaining specific resource configuration information is activated and completed through downlink control information.

If the type of uplink configured grant resource configuration is of type 1, all parameters in rrc-ConfiguredUplinkGrant are parameters required for type 1, which include: time domain resources, frequency domain resources, modulation and coding scheme (MCS), antenna ports, sounding reference signal (SRS) resource indication, demodulation reference signal (DM-RS), ect., and other related parameters.

In addition, IE ConfiguredGrantConfig also includes common parameters required for both Type 1 and Type 2, i.e., all parameters required for uplink transmission such as periodicity, number of HARQ processes (nrofHARQ-Processes), power control, number of repetitions (repK), and redundancy version for repetitions (repK-RV).

If the type of uplink configured grant resource configuration is of type 2, apart from the common parameters required for both type 1 and type 2, time domain resources, frequency domain resources, modulation and coding scheme (IMCS) and other related parameters are not configured. For type 2, after the UE receives the common parameters for type 1 and type 2 configured in rrc-ConfiguredUplinkGrant, the UE does not immediately perform uplink transmission. Only when the UE receives a DCI scrambled by CS-RNTI indicating activation, which also carries time domain resources, frequency domain resources, modulation and coding scheme (IMCS) and other related parameters, does the UE perform type 2 configured grant uplink transmission.

In the related art, terminals are primarily powered by batteries. Uplink transmission of a terminal may be performed based on network scheduling or through grant-free resources. The main considerations for uplink transmission are data volume, reliability and latency requirements. When a cellular network supports access of AMP devices, since the energy of AMP devices comes from the environment and AMP devices possess various transmission capabilities, these factors result in the fact that the uplink transmission of AMP devices cannot be well matched with the network scheduling or resources for configured grant transmission.

Referring to FIG. 2, a flowchart of a method for uplink transmission provided by an exemplary embodiment of the present application is illustrated. The method may be performed by a terminal device, where the terminal device may be the terminal device 120 or the terminal device 130 in the network architecture illustrated in FIG. 1. As illustrated in FIG. 2, the method may include the following step 210.

In step 210: a terminal device performs uplink transmission to a network device through an uplink resource, where the uplink resource is associated with a device attribute of the terminal device, and the device attribute includes one or more of: a device type, a device capability or a service type.

In the embodiments of the present application, the terminal device performs uplink transmission through the uplink resource associated with its device attribute.

Optionally, uplink resources associated with different device attributes may be different or may not completely overlap.

The device attribute of the terminal device corresponds to the device type, the device capability and the service type of the terminal device, or multiple combinations of the device type, the device capability and the service type.

In other words, the uplink resource for the terminal device to perform uplink transmission to the network device corresponds to the device attribute of the terminal device itself.

Exemplarily, the uplink resource corresponds to the device type or the device capability of the terminal device. Specifically, for example, the uplink resource corresponds to an uplink transmission mode, a power harvesting capability or an energy storage capability, a modulation scheme or a coding scheme and a frequency-related capability of the terminal device.

Exemplarily, the uplink resource corresponds to the service type of the terminal device. Specifically, for example, the uplink resource corresponds to data volume, periodicity, latency and other information of the terminal device.

In summary, the embodiments of the present application provide a scheme for uplink transmission performed by the terminal device, where the terminal device performs uplink transmission based on the uplink resource corresponding to its device attribute. The above scheme enables terminal devices with different device attributes to perform uplink transmission through different uplink resources, thereby effectively avoiding resource conflicts and interference among terminal devices during uplink transmission, improving the success rate of uplink transmission, further reducing unnecessary energy consumption of the terminal device, and enhancing the uplink transmission efficiency and energy utilization of the terminal device.

Referring to FIG. 3, a flowchart of a method for uplink transmission provided by an exemplary embodiment of the present application is illustrated. The method may be performed by a network device, where the network device may be the network device 110 in the network architecture illustrated in FIG. 1. As illustrated in FIG. 3, the method may include the following step 310.

In step 310: a network device receives uplink transmission performed by a terminal device through an uplink resource, where the uplink resource is associated with a device attribute of the terminal device, and the device attribute includes one or more of: a device type, a device capability or a service type.

In the embodiments of the present application, the network device receives uplink transmission of the terminal device.

The terminal device performs uplink transmission to the network device through the uplink resource associated with its device attribute.

In summary, the embodiments of the present application provide a scheme for uplink transmission performed by the network device, where the network device receives uplink transmission performed by the terminal device based on the uplink resource corresponding to the device attribute of the terminal device. The above scheme enables terminal devices with different device attributes to perform uplink transmission through different uplink resources, thereby effectively avoiding resource conflicts and interference among terminal devices during uplink transmission, improving the success rate of uplink transmission, further reducing unnecessary energy consumption of the terminal device, and enhancing the energy utilization of the terminal device.

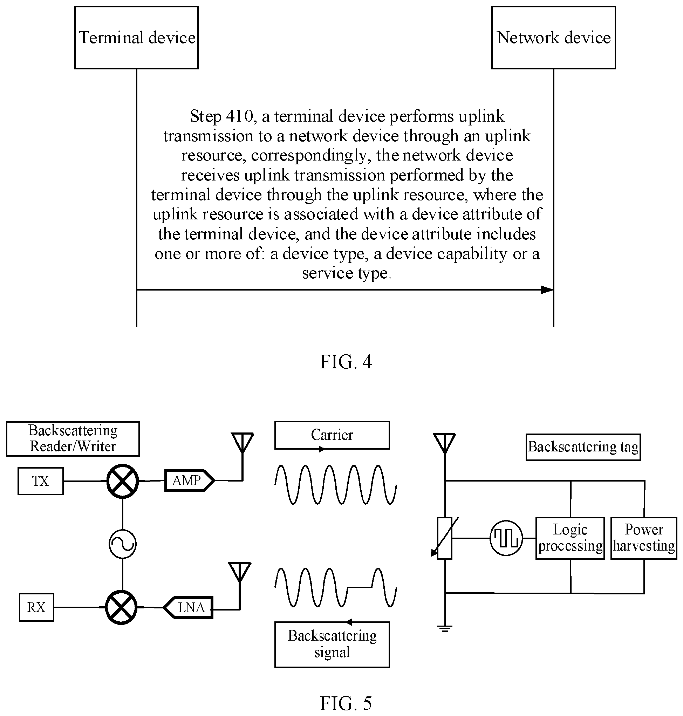

Referring to FIG. 4, a flowchart of a method for uplink transmission provided by an exemplary embodiment of the present application is illustrated. The method may be performed interactively by a terminal device and a network device. The terminal device may be the terminal device 120 or the terminal device 130 in the network architecture illustrated in FIG. 1, and the network device may be the network device 110 in the network architecture illustrated in FIG. 1. As illustrated in FIG. 4, the method may include the following step 410.

In step 410: a terminal device performs uplink transmission to a network device through an uplink resource, and correspondingly, the network device receives uplink transmission performed by the terminal device through the uplink resource, where the uplink resource is associated with a device attribute of the terminal device, and the device attribute includes one or more of: a device type, a device capability or a service type.

In the embodiments of the present application, the terminal device performs uplink transmission to the network device through the uplink resource associated with its device attribute; and correspondingly, the network device receives uplink transmission of the terminal device.

The uplink resource is associated with the device type of the terminal device, or may be associated with the device capability of the terminal device, or may be associated with the service type of the terminal device, or may be associated with a combination of two or three of the above device attributes.

In summary, the embodiments of the present application provide a scheme for uplink transmission, where the terminal device performs uplink transmission based on the uplink resource corresponding to its device attribute. The above scheme enables terminal devices with different device attributes to perform uplink transmission through different uplink resources, thereby effectively avoiding resource conflicts and interference among terminal devices during uplink transmission, improving the success rate of uplink transmission, further reducing unnecessary energy consumption of the terminal device, and enhancing the uplink transmission efficiency and energy utilization of the terminal device.

In some embodiments, the terminal device is an ambient power-enabled (AMP) terminal device.

In the embodiments of the present application, the method illustrated in FIG. 4 may be applied to the AMP terminal device.

In other words, the AMP terminal device performs uplink transmission to the network device through the uplink resource; and correspondingly, the network device receives uplink transmission performed by the AMP terminal device through the uplink resource.

Exemplarily, the present application is applicable to 3GPP cellular systems or Wi-Fi systems; the terminal device is the AMP terminal or an AMP STA, and the network device is a base station or an AP.

At present, two types of AMP terminal devices have been selected for standardization in 3GPP.

One type is an AMP terminal device with power consumption of approximately 1µW, possessing the energy storage capability and adopting the backscattering mode for uplink transmission, referred to as type-a.

The other type is an AMP terminal device with power consumption of several hundred µW, possessing the energy storage capability and equipped with an uplink or downlink amplifier, where the uplink transmission supports both active transmission mode and backscattering mode, referred to as type-b.

Since the capabilities of the two types of terminal devices are different, it is required to use resources that are adapted to their capabilities for transmission.

The embodiments of the present application provide an exemplary description of a terminal device, enabling the solutions in the present application to adapt to uplink transmission requirements of the AMP terminal device, thereby improving the success probability of uplink transmission of the AMP terminal device, and reducing energy waste of the AMP terminal device.

In some embodiments, the uplink resource is a configured grant (CG) resource.

In the embodiments of the present application, the terminal device performs uplink transmission to the network device through the CG resource; and correspondingly, the network device receives uplink transmission performed by the terminal device through the CG resource.

Optionally, the network device may configure one or more sets of CG configurations for the terminal device, with each set of CG configurations including one or more CG resources.

Exemplarily, the network device may configure multiple CG resources for the terminal device using the CG configuration, and the terminal device transmits uplink data to the network device using all or part of the multiple CG resources.

The CG resource used by the terminal device for transmitting uplink data to the network device is associated with the device attribute of the terminal device.

Exemplarily, when configuring multiple CG resources for the terminal device, the network device may indicate an association between the CG resource and the device attribute of the terminal device.

Exemplarily, configured grant transmission is a transmission mode suitable for use by the AMP terminal device. When the stored energy of the AMP terminal device reaches a certain threshold, the configured grant resource configured may be used for uplink transmission without requiring scheduling from the base station, thereby reducing the interaction with the base station required for dynamic scheduling.

In the embodiments of the present application, the AMP terminal device performs uplink transmission using the configured grant resource, where the configuration of the configured grant resource primarily includes configuring different grant resources.

The embodiments of the present application provide an exemplary description of an uplink resource, enabling the technical solutions of the present application to meet the low-latency requirements of URLLC and further optimizing the physical layer design.

In some embodiments, in a case where the device attribute includes the device type, the uplink resource is associated with an uplink transmission mode of the terminal device.

The above device type may indicate the uplink transmission mode of the terminal device, or in other words, the above device type includes the uplink transmission mode, or in other words, the device type may be indicated by the uplink transmission mode of the terminal device. That is, the uplink resource for the terminal device to perform uplink transmission to the network device may correspond to the uplink transmission mode of the terminal device.

In the embodiments of the present application, the terminal device may select, according to its own uplink transmission mode, a corresponding uplink resource to perform uplink transmission. For example, the network device pre-configures uplink resources respectively corresponding to various uplink transmission modes for the terminal device, and when performing uplink transmission, the terminal device may select the uplink resource corresponding to its own transmission mode from the uplink resources pre-configured by the network device to perform uplink transmission.

Alternatively, the terminal device may be configured with the uplink resource corresponding to the uplink transmission mode of the terminal device, and when performing uplink transmission, the terminal device directly uses the configured uplink resource to perform uplink transmission.

For example, during or after the access procedure, the terminal device may report its uplink transmission mode to the network device. Correspondingly, the network device may obtain the uplink transmission mode of the terminal device and configure, according to the uplink transmission mode of the terminal device, the uplink resource corresponding to the uplink transmission mode for the terminal device (e.g., through radio resource control (RRC) signaling or medium access control control element (MAC CE) signaling). Subsequently, the terminal device performs uplink transmission on the uplink resource configured by the network device by its own uplink transmission mode.

As another example, the network device broadcasts the uplink resources respectively corresponding to various uplink transmission modes to the surroundings through a system message (e.g., a system broadcast message or a system information block). After receiving the system message, the terminal device obtains the uplink resource corresponding to its own uplink transmission mode from the system message. Subsequently, the terminal device performs uplink transmission on the obtained uplink resource by its own uplink transmission mode.

In some embodiments, the uplink transmission mode is one of: a backscattering mode or an active transmission mode.

That is, the uplink transmission mode of the terminal device is the backscattering mode or the active transmission mode.

In the embodiments of the present application, the terminal device may obtain its own uplink transmission mode (the backscattering mode or the active transmission mode), and then select the uplink resource corresponding to its own uplink transmission mode to perform uplink transmission.

Alternatively, the network device may obtain the uplink transmission mode of the terminal device (the backscattering mode or the active transmission mode). For example, the network device may obtain the uplink transmission mode reported by the terminal device, or the network device determines, according to the device type of the terminal device, whether the uplink transmission mode of the terminal device is the backscattering mode or the active transmission mode; and then, according to the uplink transmission mode of the terminal device, configures the uplink resource for the terminal device, so that the terminal device performs uplink transmission according to the uplink resource configured by the network device.

The scheme for uplink transmission provided in the embodiments of the present application is applicable to both the backscattering mode and the active transmission mode of the terminal device, which meets different uplink transmission requirements, improves the flexibility and applicability of the present application, and provides more room for future expansion.

In some embodiments, the above step 410 may be implemented as follows.

In a case where the uplink transmission mode is the backscattering mode, the terminal device performs uplink transmission to the network device through the uplink resource based on a carrier signal; and correspondingly, uplink transmission performed by the terminal device to the network device through the uplink resource based on the carrier signal is received, where the carrier signal is provided by a carrier transmitting device.

In the embodiments of the present application, in a case where the uplink transmission mode of the terminal device is the backscattering mode, the terminal device may perform uplink transmission based on a carrier signal provided by a relevant device.

The device providing the carrier signal may be a separate device, or may be the network device, or may be a terminal device.

Exemplarily, referring to FIG. 5, a principle diagram of backscattering communication provided by an exemplary embodiment of the present application is illustrated.

As illustrated in FIG. 5, a zero-power terminal (the backscattering tag in FIG. 5) receives a carrier signal transmitted by a backscattering Reader/Writer and harvests energy through an RF power harvesting module, and then supplies power to a low-power processing module (the logic processing module in FIG. 5), to modulate the incoming wave signal and perform backscattering.

The solutions in the embodiments of the present application can meet the uplink transmission requirements when the uplink transmission mode of the terminal device is backscattering, thereby simplifying the operational difficulty of the method and reducing the design workload.

Exemplarily, taking an AMP terminal device performing uplink transmission to a network device through a CG resource as an example, the CG resource corresponds to the uplink transmission mode of the AMP terminal.

For a type-a AMP terminal device, its uplink transmission adopts the backscattering mode, and the network device is required to provide a carrier for the backscattering of the type-a AMP terminal device directly or indirectly by controlling other devices. However, a type-b AMP terminal device may not require a carrier when adopting the active transmission mode.

Therefore, when the network device configures the resource, to enable a type-a AMP terminal device or a type-b AMP terminal device that adopts the backscattering mode for uplink transmission to use the resource to perform uplink transmission, the CG resource is required to be a resource corresponding to the uplink transmission mode of the AMP terminal device.

Specifically, for example, when configuring the CG resources, the network device may indicate the transmission mode corresponding to the CG resource, e.g., the backscattering mode or the active transmission mode. Correspondingly, the AMP terminal devices select, according to their respective transmission modes, the corresponding CG resource from the CG resources pre-configured by the network device to perform uplink transmission.

The embodiments of the present application provide a feasible scheme in which the uplink resource is associated with the uplink transmission mode of the terminal device, which enables the terminal device to perform uplink transmission to the network device through the uplink resource corresponding to its uplink transmission mode, so as to meet different uplink transmission requirements, thereby avoiding ineffective transmissions and energy waste of the terminal device, and improving uplink transmission efficiency.

In some embodiments, in a case where the device attribute includes the device type, the uplink resource is associated with a modulation scheme of the terminal device.

The above device type may indicate the modulation scheme of the terminal device, or the device type includes the modulation scheme, or the device type may be indicated by the modulation scheme of the terminal device. That is, the uplink resource for the terminal device to perform uplink transmission to the network device may correspond to the modulation scheme of the terminal device.

In the embodiments of the present application, the terminal device may select, according to its own modulation scheme, a corresponding uplink resource to perform uplink transmission. For example, the network device may pre-configure uplink resources respectively corresponding to various modulation schemes for the terminal device, and when performing uplink transmission, the terminal device may select the uplink resource corresponding to its own modulation scheme from the uplink resources pre-configured by the network device to perform uplink transmission.

Alternatively, the terminal device may be configured with the uplink resource corresponding to the modulation scheme of the terminal device, and when performing uplink transmission, the terminal device directly uses the configured uplink resource to perform uplink transmission.

For example, during or after the access procedure, the terminal device may report its modulation scheme to the network device. Correspondingly, the network device may obtain the modulation scheme of the terminal device and configure, according to the modulation scheme of the terminal device, the uplink resource corresponding to the modulation scheme for the terminal device (e.g., through RRC signaling or MAC CE signaling). Subsequently, the terminal device performs uplink transmission on the uplink resource configured by the network device by its own modulation scheme.

As another example, the network device broadcasts the uplink resources respectively corresponding to various modulation schemes to the surroundings through a system message (e.g., a system broadcast message or a system information block). After receiving the system message, the terminal device obtains the uplink resource corresponding to its own modulation scheme from the system message. Subsequently, the terminal device performs uplink transmission on the obtained uplink resource by its own modulation scheme.

In some embodiments, the modulation scheme includes one or more of: OOK, FSK or PSK.

That is, the modulation schemes supported by the terminal device may be various, including On-Off Keying (OOK), Frequency Shift Keying (Amplitude Shift Keying, FSK), Phase Shift Keying (PSK) and other modulation schemes, which are not limited in the present application.

The embodiments of the present application provide an exemplary description of a modulation scheme. For multiple modulation schemes of the terminal device, the scheme provides corresponding uplink transmission resources for the terminal device and the network device, to meet requirements of the different modulation schemes, thereby further improving the feasibility of the technical solutions of the present application.

Exemplarily, taking an AMP terminal device performing uplink transmission to a network device through a CG resource as an example, different modulation schemes used by the AMP terminal device may correspond to different CG resources.

When configuring CG resources, the network device is required to indicate the modulation scheme corresponding to the CG resource. The AMP terminal selects, according to its own modulation scheme, the corresponding CG resource from the CG resources pre-configured by the network device to perform uplink transmission.

When receiving uplink transmission of the AMP terminal on the CG resource, the network device may perform demodulation according to the modulation scheme corresponding to the CG resource.

Specifically, in the configured CG resource, the network device is required to indicate the modulation scheme corresponding to the CG resource. The CG resource corresponds to the modulation scheme supported or adopted by the AMP terminal.

The embodiments of the present application provide a feasible scheme in which the uplink resource is associated with the modulation scheme of the terminal device, which enables the terminal device to perform uplink transmission to the network device through the uplink resource corresponding to its modulation scheme, so as to meet different uplink transmission requirements, thereby improving uplink transmission efficiency, simplifying the design work of uplink transmission and reducing standardization complexity.

In some embodiments, in a case where the device attribute includes the device type, the uplink resource is associated with a coding scheme of the terminal device.

The above device type may indicate the coding scheme of the terminal device, or the device type includes the coding scheme, or the device type may be indicated by the coding scheme of the terminal device. That is, the uplink resource for the terminal device to perform uplink transmission to the network device may correspond to the coding scheme of the terminal device.

In the embodiments of the present application, the terminal device may select, according to its own coding scheme, a corresponding uplink resource to perform uplink transmission. For example, the network device pre-configures uplink resources respectively corresponding to various coding schemes for the terminal device, and when performing uplink transmission, the terminal device may select the uplink resource corresponding to its own coding scheme from the uplink resources pre-configured by the network device to perform uplink transmission.

Alternatively, the terminal device may be configured with the uplink resource corresponding to the coding scheme of the terminal device, and when performing uplink transmission, the terminal device directly uses the configured uplink resource to perform uplink transmission.

For example, during or after the access procedure, the terminal device may report its coding scheme to the network device. Correspondingly, the network device may obtain the coding scheme of the terminal device and configure, according to the coding scheme of the terminal device, the uplink resource corresponding to the coding scheme for the terminal device (e.g., through RRC signaling or MAC CE signaling). Subsequently, the terminal device performs uplink transmission on the uplink resource configured by the network device by its own coding scheme.

As another example, the network device broadcasts the uplink resources respectively corresponding to various coding schemes to the surroundings through a system message (e.g., a system broadcast message or a system information block). After receiving the system message, the terminal device obtains the uplink resource corresponding to its own coding scheme from the system message. Subsequently, the terminal device performs uplink transmission on the obtained uplink resource by its own coding scheme.

In some embodiments, the coding scheme includes one or more of: NRZ coding, Manchester coding, Unipolar RZ coding, DBP coding, Miller coding or differential coding.

That is, the coding schemes supported by the terminal device may be various, including Non-Return to Zero (NRZ) coding, Manchester coding, Unipolar Return to Zero (Unipolar RZ) coding, Differential Bi-Phase (DBP) coding, Miller coding, differential coding, and the like, which are not limited in the present application.

In the embodiments of the present application, the terminal device may obtain its own coding scheme and then, select the uplink resource corresponding to its own coding scheme to perform uplink transmission.

Alternatively, the network device may obtain the coding scheme of the terminal device. For example, the network device may obtain the coding scheme reported by the terminal device, or the network device determines, according to the device type of the terminal device, the coding scheme of the terminal device; and then, according to the coding scheme of the terminal device, configures the uplink resource for the terminal device, so that the terminal device performs uplink transmission according to the uplink resource configured by the network device.

The embodiments of the present application provide an exemplary description of a coding scheme. For multiple coding schemes of the terminal device, the scheme provides corresponding uplink transmission resources for the terminal device and the network device, to meet requirements of the different coding schemes, thereby further optimizing the feasibility of the technical solutions of the present application.

Exemplarily, taking an AMP terminal device performing uplink transmission to a network device through a CG resource as an example, different coding schemes used by the AMP terminal device may correspond to different CG resources.

When configuring CG resources, the network device is required to indicate the coding scheme corresponding to the CG resource. The AMP terminal selects, according to its own coding scheme, the corresponding CG resource from the CG resources pre-configured by the network device to perform uplink transmission.

When receiving uplink transmission of the AMP terminal on the CG resource, the network device may perform demodulation according to the coding scheme corresponding to the CG resource.

Specifically, in the configured CG resource, the network device is required to indicate the coding scheme corresponding to the CG resource. The CG resource corresponds to the coding scheme supported or adopted by the AMP terminal.

The embodiments of the present application provide a feasible scheme in which the uplink resource is associated with the coding scheme of the terminal device, which enables the terminal device to perform uplink transmission to the network device through the uplink resource corresponding to its coding scheme, so as to meet different uplink transmission requirements, thereby improving uplink transmission efficiency, simplifying the design work of uplink transmission and reducing standardization complexity.

In some embodiments, in a case where the device attribute includes the device capability, the uplink resource is associated with a frequency-related capability of the terminal device.

The above device capability may include the frequency-related capability. That is, the uplink resource for the terminal device to perform uplink transmission to the network device may correspond to the frequency-related capability of the terminal device.

In the embodiments of the present application, the terminal device may select, according to its own frequency-related capability, a corresponding uplink resource to perform uplink transmission. For example, the network device pre-configures uplink resources respectively corresponding to various frequency-related capabilities for the terminal device, and when performing uplink transmission, the terminal device may select the uplink resource corresponding to its own frequency-related capability from the uplink resources pre-configured by the network device to perform uplink transmission.

Alternatively, the terminal device may be configured with the uplink resource corresponding to the frequency-related capability of the terminal device, and when performing uplink transmission, the terminal device directly uses the configured uplink resource to perform uplink transmission.

For example, during or after the access procedure, the terminal device may report its frequency-related capability to the network device. Correspondingly, the network device may obtain the frequency-related capability of the terminal device and configure, according to the frequency-related capability of the terminal device, the uplink resource corresponding to the frequency-related capability for the terminal device (e.g., through RRC signaling or MAC CE signaling). Subsequently, the terminal device performs uplink transmission on the uplink resource configured by the network device.

As another example, the network device broadcasts the uplink resources respectively corresponding to various frequency-related capabilities to the surroundings through a system message (e.g., a system broadcast message or a system information block). After receiving the system message, the terminal device obtains the uplink resource corresponding to its own frequency-related capability from the system message. Subsequently, the terminal device performs uplink transmission on the obtained uplink resource.

In some embodiments, the frequency-related capability includes one or more of: a frequency-domain position, a bandwidth or a frequency modulation capability.

That is, the frequency-related capability of the terminal device corresponds to one or more of: the frequency-domain position, the bandwidth or the frequency modulation capability.

In the embodiments of the present application, the terminal device may obtain its own frequency-related capability (e.g., the frequency-domain position, the bandwidth or the frequency modulation capability), and then, select the uplink resource corresponding to its own frequency-related capability to perform uplink transmission.

Alternatively, the network device may obtain the frequency-related capability of the terminal device (e.g., the frequency-domain position, the bandwidth or the frequency modulation capability). For example, the network device may obtain the frequency-related capability reported by the terminal device, or the network device determines, according to the device capability of the terminal device, the frequency-related capability of the terminal device; and then, according to the frequency-related capability of the terminal device, configures the uplink resource for the terminal device, so that the terminal device performs uplink transmission according to the uplink resource configured by the network device.

Exemplarily, the terminal device may operate at multiple frequency-domain positions or bandwidths.

The embodiments of the present application provide an exemplary description of the frequency-related capability. For different frequency-related capabilities of the terminal device, the scheme provides corresponding uplink transmission resources for the terminal device and the network device, to meet different frequency requirements, thereby further optimizing the feasibility of the technical solutions of the present application, and simplifying the design work of the scheme for uplink transmission.

Exemplarily, taking an AMP terminal device performing uplink transmission to a network device through a CG resource as an example, the CG resource corresponds to the frequency-related capability of the AMP terminal.

For a type-a AMP terminal, due to its extremely low complexity, it may operate at a fixed frequency-domain position and bandwidth. For a type-b AMP terminal, it may support variable frequency-domain positions and bandwidths.

Therefore, the CG resource configured by the network device may correspond to different frequency-related capabilities of the AMP terminal, including the frequency-domain position, the bandwidth and the like of the CG resource, to meet the requirement that AMP terminals with different frequency capabilities use the corresponding resources for uplink transmission.

Specifically, in the configured CG resource, the network device is required to indicate the frequency-domain resource corresponding to the CG resource. The frequency-domain resource corresponds to the frequency-related capability of the AMP terminal.

The embodiments of the present application provide a feasible scheme in which the uplink resource is associated with the frequency-related capability of the terminal device, which enables the terminal device to perform uplink transmission to the network device through the uplink resource corresponding to its frequency-related capability, so as to meet different uplink transmission requirements, thereby improving uplink transmission efficiency.

In some embodiments, in a case where the device attribute includes the device capability, the uplink resource is associated with a power harvesting capability of the terminal device.

The above device capability may include the power harvesting capability. That is, the uplink resource for the terminal device to perform uplink transmission to the network device may correspond to the power harvesting capability of the terminal device.

In the embodiments of the present application, the terminal device may select, according to its own power harvesting capability, a corresponding uplink resource to perform uplink transmission. For example, the network device pre-configures uplink resources respectively corresponding to various power harvesting capabilities for the terminal device, and when performing uplink transmission, the terminal device may select the uplink resource corresponding to its own power harvesting capability from the uplink resources pre-configured by the network device to perform uplink transmission.

Alternatively, the terminal device may be configured with the uplink resource corresponding to the power harvesting capability of the terminal device, and when performing uplink transmission, the terminal device directly uses the configured uplink resource to perform uplink transmission.

For example, during or after the access procedure, the terminal device may report its power harvesting capability to the network device. Correspondingly, the network device may obtain the power harvesting capability of the terminal device and configure, according to the power harvesting capability of the terminal device, the uplink resource corresponding to the power harvesting capability for the terminal device (e.g., through RRC signaling or MAC CE signaling). Subsequently, the terminal device performs uplink transmission on the uplink resource configured by the network device.

As another example, the network device broadcasts the uplink resources respectively corresponding to various power harvesting capabilities to the surroundings through a system message (e.g., a system broadcast message or a system information block). After receiving the system message, the terminal device obtains the uplink resource corresponding to its own power harvesting capability from the system message. Subsequently, the terminal device performs uplink transmission on the obtained uplink resource.

Exemplarily, the present application proposes a method for uplink transmission directed to the characteristics of the energy source of the AMP terminal device.

Taking the power harvesting method being the RF power harvesting as an example, the AMP terminal device collects radio waves through an RF power harvesting module, to obtain radio energy and store it in an energy storage unit. After the energy storage unit obtains sufficient energy, the energy storage unit may drive the low-power circuit to perform operations such as demodulation of the forward link signals and modulation and transmission of the reverse link signals. When the AMP terminal device has an uplink transmission requirement, the stored energy is required to be used to perform uplink transmission.

The embodiments of the present application provide a feasible scheme in which the uplink resource is associated with the power harvesting capability of the terminal device, which enables the terminal device to perform uplink transmission to the network device through the uplink resource corresponding to its power harvesting capability, so as to meet different uplink transmission requirements, thereby improving uplink transmission efficiency and reducing standardization complexity.

In some embodiments, a periodicity parameter of the uplink resource is associated with the power harvesting capability of the terminal device.

That is, the terminal device may determine a period of the uplink resource according to a duration required to harvest the set energy for uplink transmission.

Exemplarily, a period of the CG resource matches the time required for the AMP terminal device to harvest the energy corresponding to uplink transmission.

The embodiments of the present application provide an exemplary description in which the uplink resource is associated with the power harvesting capability of the terminal device. For different power harvesting capabilities of the terminal device, the scheme provides corresponding periodicity parameters of the uplink resources to the terminal device and the network device, which can simplify the operational difficulty of the scheme for uplink transmission and reduce the design workload.

In some embodiments, in a case where the device attribute includes the device capability, the uplink resource is associated with an energy storage capability of the terminal device.

The above device capability may include the energy storage capability. That is, the uplink resource for the terminal device to perform uplink transmission to the network device may correspond to the energy storage capability of the terminal device.

In the embodiments of the present application, the terminal device may select, according to its own energy storage capability, a corresponding uplink resource to perform uplink transmission. For example, the network device pre-configures uplink resources respectively corresponding to various energy storage capabilities for the terminal device, and when performing uplink transmission, the terminal device may select the uplink resource corresponding to its own energy storage capability from the uplink resources pre-configured by the network device to perform uplink transmission.

Alternatively, the terminal device may be configured with the uplink resource corresponding to the energy storage capability of the terminal device, and when performing uplink transmission, the terminal device directly uses the configured uplink resource to perform uplink transmission.

For example, during or after the access procedure, the terminal device may report its energy storage capability to the network device. Correspondingly, the network device may obtain the energy storage capability of the terminal device and configure, according to the energy storage capability of the terminal device, the uplink resource corresponding to the energy storage capability for the terminal device (e.g., through RRC signaling or MAC CE signaling). Subsequently, the terminal device performs uplink transmission on the uplink resource configured by the network device.

As another example, the network device broadcasts the uplink resources respectively corresponding to various energy storage capabilities to the surroundings through a system message (e.g., a system broadcast message or a system information block). After receiving the system message, the terminal device obtains the uplink resource corresponding to its own energy storage capability from the system message. Subsequently, the terminal device performs uplink transmission on the obtained uplink resource.

Exemplarily, the energy storage capability of the terminal device determines the power harvesting efficiency of the terminal device.

The embodiments of the present application provide a feasible scheme in which the uplink resource is associated with the energy storage capability of the terminal device, which enables the terminal device to perform uplink transmission to the network device through the uplink resource corresponding to its energy storage capability, so as to meet different uplink transmission requirements, thereby improving uplink transmission efficiency.

In some embodiments, a time-domain resource parameter of the uplink resource corresponds to the energy storage capability of the terminal device.

That is, the terminal device may determine the time-domain resource parameter of the uplink resource according to a duration for which the existing stored energy can be used for uplink transmission.

The embodiments of the present application provide an exemplary description in which the uplink resource is associated with the energy storage capability of the terminal device. For different energy storage capabilities of the terminal device, the scheme provides corresponding time-domain resource parameters of the uplink resources to the terminal device and the network device, which can simplify the operational difficulty of the scheme for uplink transmission and reduce the design workload.

Exemplarily, taking an AMP terminal device performing uplink transmission to a network device through a CG resource as an example, the CG resource corresponds to the power harvesting capability or the energy storage capability of the AMP terminal device.

The power harvesting capability or the energy storage capability of the AMP terminal device determines the usage of the uplink resource by the AMP terminal device, including the power harvesting manner and efficiency of the AMP terminal device, which determine how long it takes for the AMP terminal device to harvest sufficient energy to perform uplink transmission.

The periodicity parameter of the CG resource may match the power harvesting capability of the AMP terminal device. For example, the period of the CG matches a time required for the AMP terminal device to harvest sufficient energy to perform uplink transmission. The energy storage capability of the AMP terminal device may determine a duration for which each transmission is performed by the AMP terminal device.

The time-domain resource parameter of the CG resource may match the energy storage capability of the AMP terminal device. For example, a time-domain resource size of the CG resource matches a duration for which the stored energy of the AMP terminal device is sufficient to perform uplink transmission.

In some embodiments, in a case where the device attribute includes the service type, the uplink resource is associated with application requirement information of the terminal device.

The above service type may indicate the application requirement information of the terminal device, or the service type includes the application requirement information of the terminal device, or the service type may be indicated by the application requirement information of the terminal device. That is, the uplink resource for the terminal device to perform uplink transmission to the network device may correspond to information such as the application scenario and requirements of the terminal device.

In the embodiments of the present application, the terminal device may select, according to its own application requirement information, a corresponding uplink resource to perform uplink transmission. For example, the network device pre-configures uplink resources respectively corresponding to various application requirement information for the terminal device, and when performing uplink transmission, the terminal device may select the uplink resource corresponding to its own application requirement information from the uplink resources pre-configured by the network device to perform uplink transmission.

Alternatively, the terminal device may be configured with the uplink resource corresponding to the application requirement information of the terminal device, and when performing uplink transmission, the terminal device directly uses the configured uplink resource to perform uplink transmission.

For example, during or after the access procedure, the terminal device may report its application requirement information to the network device. Correspondingly, the network device may obtain the application requirement information of the terminal device and configure, according to the application requirement information of the terminal device, the uplink resource corresponding to the application requirement information for the terminal device (e.g., through RRC signaling or MAC CE signaling). Subsequently, the terminal device performs uplink transmission on the uplink resource configured by the network device.

As another example, the network device broadcasts the uplink resources respectively corresponding to various application requirement information to the surroundings through a system message (e.g., a system broadcast message or a system information block). After receiving the system message, the terminal device obtains the uplink resource corresponding to its own application requirement information from the system message. Subsequently, the terminal device performs uplink transmission on the obtained uplink resource.

Exemplarily, the application scenario and the requirements of the AMP terminal device include at least one of:
object identification, such as logistics, management of products on production lines, and supply chain management;
environmental monitoring, such as monitoring of temperature, humidity and harmful gases in working environments and natural environments;
positioning, such as indoor positioning, smart item finding and positioning of items on production lines; or
smart control, such as smart control of various electrical appliances in smart homes (e.g., turning air conditioners on/off or adjusting temperature), and smart control of various facilities in agricultural greenhouses (e.g., automatic irrigation or fertilization).

The embodiments of the present application provide a feasible scheme in which the uplink resource is associated with the application requirement information of the terminal device, which enables the terminal device to perform uplink transmission to the network device through the uplink resource corresponding to its application requirement information, so as to meet different uplink transmission requirements, thereby improving uplink transmission efficiency and simultaneously providing more room for future expansion.

In some embodiments, the application requirement information of the terminal device includes one or more of: a data volume, a service periodicity or a latency.

That is, the application requirement information of the terminal device may include any one of: the data volume, the service periodicity or the latency, or may include a combination of any plurality of the data volume, the service periodicity and the latency.

In the embodiments of the present application, the terminal device may obtain its own application requirement information (the data volume, or the service periodicity or the latency); and then, select the uplink resource corresponding to its own application requirement information to perform uplink transmission.

Alternatively, the network device may obtain the application requirement information of the terminal device (the data volume, or the service periodicity or the latency). For example, the network device may obtain the application requirement information reported by the terminal device, or the network device may determine, according to the service type of the terminal device, the application requirement information of the terminal device; and then, according to the application requirement information of the terminal device, configure the uplink resource for the terminal device, so that the terminal device performs uplink transmission according to the uplink resource configured by the network device.

The embodiments of the present application provide an exemplary description of the application requirement information. For different application requirement information of the terminal device, the scheme provides corresponding uplink transmission resources to the terminal device and the network device, so as to meet different application requirements, thereby further optimizing the feasibility of the technical solutions of the present application, and simplifying the design work of the scheme for uplink transmission.

In some embodiments, one or more of the following parameters of the uplink resource are associated with the application requirement information of the terminal device:
a periodicity, a resource size or the number of resource repetitions.

That is, the terminal device may determine one or more parameters among the periodicity, the resource size and the number of resource repetitions of the uplink resource according to the application requirement information.

The embodiments of the present application provide an exemplary description in which the uplink resource is associated with the application requirement information of the terminal device. For different application requirement information of the terminal device, the scheme provides corresponding time-domain resource parameters of the uplink resource to the terminal device and the network device, which can simplify the operational difficulty of the scheme for uplink transmission and reduce standardization complexity.

Exemplarily, taking an AMP terminal device performing uplink transmission to a network device through a CG resource as an example, the CG resource corresponds to the service type of the AMP terminal using the resource.

For the AMP terminal device, there may be different application scenarios. The examples are as follows.

For logistics cargo identification, type-a AMP terminal devices are generally used. The data to be uploaded is mainly identification information, and the data volume is relatively small. The service has a certain burstiness, requiring the ability to upload a large number of small data packets in a short time.

For sensor-type applications, type-b AMP terminal devices may be used, which have stronger coverage and energy storage capability. The volume of sensor data transmitted is relatively large and has certain periodicity requirements. In some alarm scenarios, there are also certain latency requirements.

Due to the low complexity and the characteristic of ambient energy-based operating of AMP terminal devices, the supported service types are relatively limited and cannot support a wide range of services like related mobile broadband terminal devices.

Therefore, for the service types of AMP terminal devices, the matched CG resource may be configured in terms of the service requirements such as data volume, characteristics of service arrival periodicity, and latency, including the periodicity, the resource size and the number of resource repetitions of the CG resource.

In summary, configuring the resource that matches the type, the capability or the service of the AMP terminal in the present application enables the AMP terminal to select the appropriate resource to perform uplink transmission, thereby improving resource utilization and the success rate of uplink transmission of the AMP terminal.

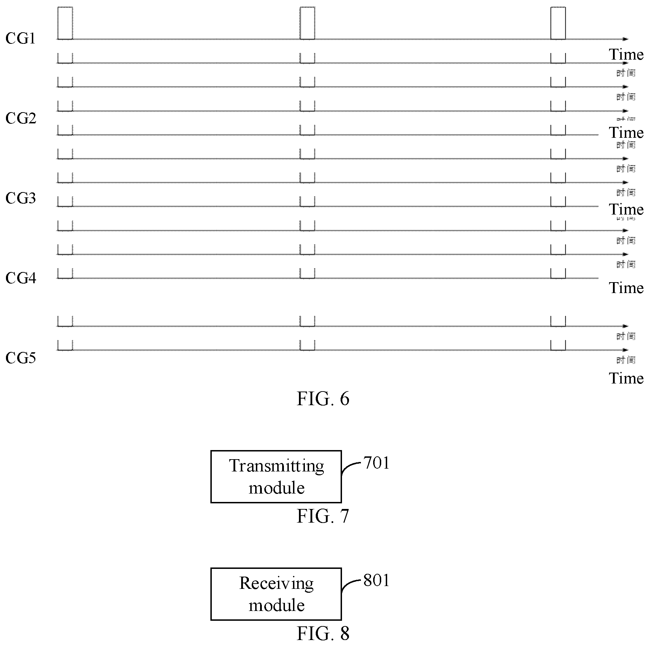

The CG resource corresponds to the capability or the service of the AMP terminal, and the network device is required to configure multiple sets of CG resources. Referring to FIG. 6, a schematic diagram of multiple sets of CG resources provided by an exemplary embodiment of the present application is illustrated.

As illustrated in FIG. 6, CG1 and CG2 have the same period but different time-domain resource sizes; CG1 and CG3 have the same period but different frequency-domain resource sizes; and CG4 configures a certain number of resource repetitions within one period range, allowing the AMP terminal to flexibly initiate transmission on these repeated resources. Even if service arrival jitters occur, the transmission can be initiated within a relatively smaller time range without waiting for the next resource period. CG5 has a shorter period, which may meet services with high latency requirements or services with short arrival periods.

The above embodiments are described taking the 3GPP cellular system as an example. The scheme of the present application may also be applied to IEEE 802.11 technology, i.e., Wi-Fi systems. The CG resources applied to the Wi-Fi systems may be resources obtained by an AP through channel access for use by an AMP STA, and the resources may also be pre-scheduled by the AP for use by the AMP STA. These pre-scheduled resources may have a corresponding relationship with the type, capability or service of the AMP STA.

Referring to FIG. 7, a block diagram of an apparatus for uplink transmission provided by an exemplary embodiment of the present application is illustrated. The apparatus for uplink transmission has the functions performed by the terminal device in the method illustrated in FIG. 2 or FIG. 4 above. As illustrated in FIG. 7, the apparatus may include:
a transmitting module 701, configured to perform uplink transmission to a network device through an uplink resource, where the uplink resource is associated with a device attribute of a terminal device, and the device attribute includes one or more of: a device type, a device capability or a service type.

In some embodiments, the terminal device is an AMP terminal device.

In some embodiments, the uplink resource is a CG resource.

In some embodiments, in a case where the device attribute includes the device type, the uplink resource is associated with an uplink transmission mode of the terminal device.

In some embodiments, the uplink transmission mode is one of: a backscattering mode or an active transmission mode.

In some embodiments, the transmitting module 701 is configured to perform, in a case where the uplink transmission mode is the backscattering mode, uplink transmission to the network device through the uplink resource based on a carrier signal, where the carrier signal is provided by a carrier transmitting device.

In some embodiments, in a case where the device attribute includes the device type, the uplink resource is associated with a modulation scheme of the terminal device.

In some embodiments, the modulation scheme includes one or more of: OOK, FSK or PSK.

In some embodiments, in a case where the device attribute includes the device type, the uplink resource is associated with a coding scheme of the terminal device.

In some embodiments, the coding scheme includes one or more of: NRZ coding, Manchester coding, Unipolar RZ coding, DBP coding, Miller coding or differential coding.

In some embodiments, in a case where the device attribute includes the device capability, the uplink resource is associated with a frequency-related capability of the terminal device.

In some embodiments, the frequency-related capability includes one or more of: a frequency-domain position, a bandwidth or a frequency modulation capability.

In some embodiments, in a case where the device attribute includes the device capability, the uplink resource is associated with a power harvesting capability of the terminal device.

In some embodiments, a periodicity parameter of the uplink resource is associated with the power harvesting capability of the terminal device.

In some embodiments, in a case where the device attribute includes the device capability, the uplink resource is associated with an energy storage capability of the terminal device.

In some embodiments, a time-domain resource parameter of the uplink resource corresponds to the energy storage capability of the terminal device.

In some embodiments, in a case where the device attribute includes the service type, the uplink resource is associated with application requirement information of the terminal device.

In some embodiments, the application requirement information of the terminal device includes one or more of: a data volume, a service periodicity or a latency.

In some embodiments, one or more of the following parameters of the uplink resource are associated with the application requirement information of the terminal device:
a periodicity, a resource size or a number of resource repetitions.

Referring to FIG. 8, a block diagram of an apparatus for uplink transmission provided by an exemplary embodiment of the present application is illustrated. The apparatus for uplink transmission has the functions performed by the network device in the method illustrated in FIG. 3 or FIG. 4 above. As illustrated in FIG. 8, the apparatus may include:
a receiving module 801, configured to receive uplink transmission performed by a terminal device through an uplink resource, where the uplink resource is associated with a device attribute of the terminal device, and the device attribute includes one or more of: a device type, a device capability or a service type.

In some embodiments, the terminal device is an AMP terminal device.

In some embodiments, the uplink resource is a CG resource.

In some embodiments, in a case where the device attribute includes the device type, the uplink resource is associated with an uplink transmission mode of the terminal device.

In some embodiments, the uplink transmission mode is one of: a backscattering mode or an active transmission mode.

In some embodiments, the receiving module 801 is configured to,
in a case where the uplink transmission mode is the backscattering mode, receive uplink transmission performed by the terminal device to the network device through the uplink resource based on a carrier signal, where the carrier signal is provided by a carrier transmitting device of the network device.

In some embodiments, in a case where the device attribute includes the device type, the uplink resource is associated with a modulation scheme of the terminal device.

In some embodiments, the modulation scheme includes one or more of: OOK, FSK or PSK.

In some embodiments, in a case where the device attribute includes the device type, the uplink resource is associated with a coding scheme of the terminal device.

In some embodiments, the coding scheme includes one or more of: NRZ coding, Manchester coding, Unipolar RZ coding, DBP coding, Miller coding or differential coding.

In some embodiments, in a case where the device attribute includes the device capability, the uplink resource is associated with a frequency-related capability of the terminal device.

In some embodiments, the frequency-related capability includes one or more of: a frequency-domain position, a bandwidth or a frequency modulation capability.

In some embodiments, in a case where the device attribute includes the device capability, the uplink resource is associated with a power harvesting capability of the terminal device.

In some embodiments, a periodicity parameter of the uplink resource is associated with the power harvesting capability of the terminal device.

In some embodiments, in a case where the device attribute includes the device capability, the uplink resource is associated with an energy storage capability of the terminal device.

In some embodiments, a time-domain resource parameter of the uplink resource corresponds to the energy storage capability of the terminal device.

In some embodiments, in a case where the device attribute includes the service type, the uplink resource is associated with application requirement information of the terminal device.

In some embodiments, the application requirement information of the terminal device includes one or more of: a data volume, a service periodicity or a latency.

In some embodiments, one or more of the following parameters of the uplink resource are associated with the application requirement information of the terminal device:
a periodicity, a resource size or a number of resource repetitions.

It should be noted that, when the apparatus provided in the above embodiments illustrated in FIG. 7 and FIG. 8 implements its functions, the division of the above various functional modules is merely used as an example for illustration. In practical applications, the above functions can be assigned to different functional modules to complete according to actual needs, that is, the internal structure of the device is divided into different functional modules to complete all or part of the functions described above.

Regarding the apparatus in the above embodiments, the specific manner in which each module performs operations has been described in detail in the embodiments related to the method, and will not be described in detail here.

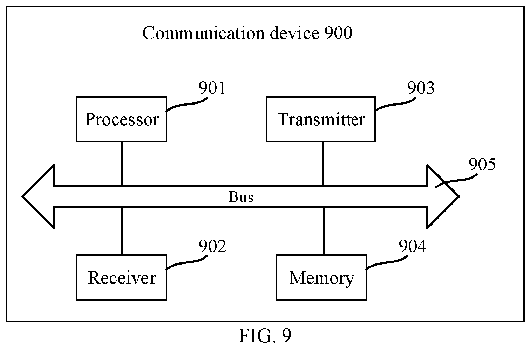

Referring to FIG. 9, a schematic structural diagram of a communication device 900 provided by an embodiment of the present application is illustrated. As illustrated in FIG. 9, the communication device 900 may include: a processor 901, a receiver 902, a transmitter 903, a memory 904 and a bus 905.

The processor 901 includes one or more processing cores. The processor 901 is configured to execute various functional applications and information processing by invoking software programs and modules.

The receiver 902 and the transmitter 903 may be implemented as a communication component, and the communication component may be a communication chip. The communication chip may also be referred to as a transceiver. The memory 904 is connected to the processor 901 via the bus 905. The memory 904 may be configured to store a computer program, and the processor 901 is configured to execute the computer program to implement the various steps in the above method embodiments.

In addition, the memory 904 may be implemented by any type of volatile or non-volatile storage device or a combination thereof. The volatile or non-volatile storage device includes, but is not limited to, a magnetic disk or an optical disc, an electrically erasable programmable read-only memory, an erasable programmable read-only memory, a static random-access memory, a read-only memory, a magnetic memory, a flash memory, or a programmable read-only memory.

In an exemplary scheme, when the communication device 900 is implemented as the above terminal device, the receiver 902 and the processor 901 execute the computer program, to enable the communication device to implement the various steps performed by the terminal device in the method illustrated in FIG. 2. In this case, the above receiver 902 may correspond to implementing the methods and steps implemented by the receiving module 801 in FIG. 8, and the transmitter 903 may correspond to implementing the methods and steps implemented by the transmitting module in FIG. 7.

In an exemplary scheme, when the communication device 900 is implemented as the above network device, the transmitter 903 and the processor 901 execute the computer program, to enable the communication device to implement the various steps performed by the network device in the method illustrated in FIG. 3. In this case, the above transmitter 903 may correspond to implementing the methods and steps implemented by the transmitting module 901 in FIG. 9, and the receiver 902 may correspond to implementing the methods and steps implemented by the receiving module in FIG. 9.

The embodiments of the present application further provide a computer-readable storage medium. The computer program is stored in the storage medium, and the computer program is loaded and executed by a processor to implement all or part of the steps performed by the terminal device or the network device in the methods illustrated in FIG. 2, FIG. 3 or FIG. 4.

The present application further provides a chip. The chip includes an integrated circuit and an application program. The chip is configured to operate in a communication device, so as to enable the communication device to execute all or part of the steps performed by the terminal device or the network device in the methods illustrated in FIG. 2, FIG. 3 or FIG. 4.

The present application further provides a computer program product. The computer program product or computer program includes computer instructions, and the computer instructions are stored in a computer-readable storage medium. A processor of a communication device reads the computer instructions from the computer-readable storage medium, and the processor executes the computer instructions, to enable the communication device to execute all or part of the steps performed by the terminal device or the network device in the methods illustrated in FIG. 2, FIG. 3 or FIG. 4.

The present application further provides a computer program. The computer program is executed by a processor of a communication device, to implement all or part of the steps performed by the terminal device or the network device in the methods illustrated in FIG. 2, FIG. 3 or FIG. 4.

Those skilled in the art should appreciate that in the one or more of the above examples, the functions described in the embodiments of the present application may be implemented in hardware, software, firmware or any combination thereof. When implemented in software, the functions may be stored on a computer-readable medium or transmitted as one or more instructions or codes on the computer-readable medium. The computer-readable medium includes both a computer storage medium and a communication medium, where the communication medium includes any medium that facilitates the transfer of a computer program from one place to another. The storage medium may be any available medium that can be accessed by a general-purpose or special-purpose computer.

The foregoing descriptions are merely exemplary embodiments of the present application and are not intended to limit the present application. Any modifications, equivalent substitutions, improvements or the like made within the spirit and principles of the present application shall fall within the scope of protection of the present application.

## Claims

1. A method for uplink transmission, performed by a terminal device, comprising:
performing uplink transmission to a network device through an uplink resource, wherein the uplink resource is associated with a device attribute of the terminal device, and the device attribute comprises one or more of: a device type, a device capability or a service type.

2. The method according to claim 1, wherein the terminal device is an ambient power-enabled (AMP) terminal device.

3. The method according to claim 1 or 2, wherein the uplink resource is a configured grant (CG) resource.

4. The method according to any one of claims 1 to 3, wherein in a case where the device attribute comprises the device type, the uplink resource is associated with an uplink transmission mode of the terminal device.

5. The method according to claim 4, wherein the uplink transmission mode is one of: a backscattering mode or an active transmission mode.

6. The method according to claim 5, wherein performing uplink transmission to the network device through the uplink resource comprises:
in a case where the uplink transmission mode is the backscattering mode, performing uplink transmission to the network device through the uplink resource based on a carrier signal, wherein the carrier signal is provided by a carrier transmitting device.

7. The method according to any one of claims 1 to 6, wherein in a case where the device attribute comprises the device type, the uplink resource is associated with a modulation scheme of the terminal device.

8. The method according to claim 7, wherein the modulation scheme comprises one or more of: On-Off Keying (OOK), Frequency Shift Keying (FSK) or Phase Shift Keying (PSK).

9. The method according to any one of claims 1 to 8, wherein in a case where the device attribute comprises the device type, the uplink resource is associated with a coding scheme of the terminal device.

10. The method according to claim 9, wherein the coding scheme comprises one or more of: Non-Return to Zero (NRZ) coding, Manchester coding, Unipolar Return to Zero (RZ) coding, Differential Bi-Phase (DBP) coding, Miller coding or differential coding.

11. The method according to any one of claims 1 to 10, wherein in a case where the device attribute comprises the device capability, the uplink resource is associated with a frequency-related capability of the terminal device.

12. The method according to claim 11, wherein the frequency-related capability comprises one or more of: a frequency-domain position, a bandwidth or a frequency modulation capability.

13. The method according to any one of claims 1 to 12, wherein in a case where the device attribute comprises the device capability, the uplink resource is associated with a power harvesting capability of the terminal device.

14. The method according to claim 13, wherein a periodicity parameter of the uplink resource is associated with the power harvesting capability of the terminal device.

15. The method according to any one of claims 1 to 14, wherein in a case where the device attribute comprises the device capability, the uplink resource is associated with an energy storage capability of the terminal device.

16. The method according to claim 15, wherein a time-domain resource parameter of the uplink resource corresponds to the energy storage capability of the terminal device.

17. The method according to any one of claims 1 to 16, wherein in a case where the device attribute comprises the service type, the uplink resource is associated with application requirement information of the terminal device.

18. The method according to claim 17, wherein the application requirement information of the terminal device comprises one or more of: a data volume, a service periodicity or a latency.

19. The method according to claim 17 or 18, wherein one or more of the following parameters of the uplink resource are associated with the application requirement information of the terminal device:
a periodicity, a resource size or a number of resource repetitions.

20. A method for uplink transmission, performed by a network device, comprising:
receiving uplink transmission performed by a terminal device through an uplink resource, wherein the uplink resource is associated with a device attribute of the terminal device, and the device attribute comprises one or more of: a device type, a device capability or a service type.

21. The method according to claim 20, wherein the terminal device is an ambient power-enabled (AMP) terminal device.

22. The method according to claim 20 or 21, wherein the uplink resource is a configured grant (CG) resource.

23. The method according to any one of claims 20 to 22, wherein in a case where the device attribute comprises the device type, the uplink resource is associated with an uplink transmission mode of the terminal device.

24. The method according to claim 23, wherein the uplink transmission mode is one of: a backscattering mode or an active transmission mode.

25. The method according to claim 24, wherein receiving uplink transmission performed by the terminal device through the uplink resource comprises:
in a case where the uplink transmission mode is the backscattering mode, receiving uplink transmission performed by the terminal device to the network device through the uplink resource based on a carrier signal, wherein the carrier signal is provided by a carrier transmitting device of the network device.

26. The method according to any one of claims 20 to 25, wherein in a case where the device attribute comprises the device type, the uplink resource is associated with a modulation scheme of the terminal device.

27. The method according to claim 26, wherein the modulation scheme comprises one or more of: On-Off Keying (OOK), Frequency Shift Keying (FSK) or Phase Shift Keying (PSK).

28. The method according to any one of claims 20 to 27, wherein in a case where the device attribute comprises the device type, the uplink resource is associated with a coding scheme of the terminal device.

29. The method according to claim 28, wherein the coding scheme comprises one or more of: Non-Return to Zero (NRZ) coding, Manchester coding, Unipolar Return to Zero (RZ) coding, Differential Bi-Phase (DBP) coding, Miller coding or differential coding.

30. The method according to any one of claims 20 to 29, wherein in a case where the device attribute comprises the device capability, the uplink resource is associated with a frequency-related capability of the terminal device.

31. The method according to claim 30, wherein the frequency-related capability comprises one or more of: a frequency-domain position, a bandwidth or a frequency modulation capability.

32. The method according to any one of claims 20 to 31, wherein in a case where the device attribute comprises the device capability, the uplink resource is associated with a power harvesting capability of the terminal device.

33. The method according to claim 32, wherein a periodicity parameter of the uplink resource is associated with the power harvesting capability of the terminal device.

34. The method according to any one of claims 20 to 33, wherein in a case where the device attribute comprises the device capability, the uplink resource is associated with an energy storage capability of the terminal device.

35. The method according to claim 34, wherein a time-domain resource parameter of the uplink resource corresponds to the energy storage capability of the terminal device.

36. The method according to any one of claims 1 to 35, wherein in a case where the device attribute comprises the service type, the uplink resource is associated with application requirement information of the terminal device.

37. The method according to claim 36, wherein the application requirement information of the terminal device comprises one or more of: a data volume, a service periodicity or a latency.

38. The method according to claim 36 or 37, wherein one or more of the following parameters of the uplink resource are associated with the application requirement information of the terminal device:
a periodicity, a resource size or a number of resource repetitions.

39. An apparatus for uplink transmission, comprising:
a transmitting module, configured to perform uplink transmission to a network device through an uplink resource, wherein the uplink resource is associated with a device attribute of a terminal device, and the device attribute comprises one or more of: a device type, a device capability or a service type.

40. An apparatus for uplink transmission, comprising:
a receiving module, configured to receive uplink transmission performed by a terminal device through an uplink resource, wherein the uplink resource is associated with a device attribute of the terminal device, and the device attribute comprises one or more of: a device type, a device capability or a service type.

41. A terminal device, comprising: a processor, a memory and a transceiver;
wherein the memory is configured to store a computer program, and the processor is configured to execute the computer program, to enable the terminal device to implement the method for uplink transmission according to any one of claims 1 to 19.

42. A network device, comprising: a processor, a memory and a transceiver;
wherein the memory is configured to store a computer program, and the processor is configured to execute the computer program, to enable the network device to implement the method for uplink transmission according to any one of claims 20 to 38.

43. A computer-readable storage medium having a computer program stored thereon, wherein the computer program is used to be executed by a processor of a communication device, to enable the communication device to implement the method for uplink transmission according to any one of claims 1 to 38.

44. A chip, comprising: an integrated circuit and an application program, wherein the chip is configured to operate in a communication device, to enable the communication device to perform the method for uplink transmission according to any one of claims 1 to 38.

45. A computer program product, comprising: computer instructions, wherein the computer instructions are stored in a computer-readable storage medium; and a processor of a communication device reads the computer instructions from the computer-readable storage medium and executes the computer instructions, to enable the communication device to perform the method for uplink transmission according to any one of claims 1 to 38.

46. A computer program, wherein the computer program is executed by a processor of a communication device, to enable the communication device to implement the method for uplink transmission according to any one of claims 1 to 38.
